# FASCICULE DE BREVET EUROPEEN

(11) **EP 0 375 503 B1**
(45) Date de publication et mention de la délivrance du brevet: **28.02.1996**
(21) Numéro de dépôt: 89403428.9
(22) Date de dépôt: 11.12.1989
(51) Int. Cl.: C08F 8/32, C10M 149/00

(54) **Additifs aux lubrifiants résultant de la condensation d'une alkylène polyamine sur un copolymère ayant des groupements carboxyliques vicinaux**
Zusatzstoffe für Schmiermittel, die aus der Kondensation eines Alkylen-polyamins mit einem benachbarten Carboxylgruppen aufweisenden Copolymer resultieren
Additives to lubricants resulting from the condensation of an alkylene polyamine onto a copolymer having contiguous carboxylic groups

(30) Priorité: 12.12.1988 FR 8816336
(43) Date de publication de la demande: 27.06.1990
(73) Titulaire: ELF AQUITAINE, F-92400 Courbevoie (FR)
(72) Inventeur: Germanaud, Laurent, F-38540 Heyrieux (FR); Truong, Dinh, Nguyen, F-06220 Vallauris (FR); Marie, Gilbert, F-64000 Pau (FR); Turello, Patrick, F-69340 Francheville (FR)
(74) Mandataire: Boillot, Marc

(56) Documents cités:
- EP-A- 0 112 195
- EP-A- 0 274 589
- EP-A- 0 291 367
- WO-A-87/03890
- WO-A-89/04845
- DE-A- 3 324 195
- FR-A- 2 393 058
- GB-A- 1 400 727
- GB-A- 1 548 464
- GB-A- 2 097 800
- US-A- 3 702 300
- US-A- 4 160 739
- US-A- 4 320 019
- US-A- 4 670 173
- PATENT ABSTRACTS OF JAPAN, vol. 7, no. 43 (C-152)[1188], 19 février 1983; & JP-A-57 195 104

## Description

La présente invention concerne des composés polymériques utilisables comme additifs multifonctionnels aux lubrifiants.

On sait que les huiles lubrifiantes, et en particulier les huiles pour carter destinées aux moteurs à combustion interne, renferment des additifs variés servant à améliorer les performances desdites huiles lors de leur utilisation. Certains additifs sont utilisés pour augmenter l'indice de viscosité de l'huile tandis que d'autres assurent, par exemple, le maintien de la propreté du carter par mise en suspension des dépôts insolubles, encore appelés boues, se formant dans l'huile.

Les additifs destinés à améliorer l'indice de viscosité de l'huile doivent avoir, d'une part, un effet épaississant suffisant sur une huile lubrifiante légère aux températures élevées pour que les propriétés lubrifiantes de cette huile correspondent à celle d'une huile lubrifiante plus lourde et, d'autre part, un effet épaississant limité sur une huile lubrifiante légère aux basses températures pour éviter de perturber les caractéristiques de ladite huile à ces basses températures. Ce sont généralement des composés polymères à longues chaînes tels que, par exemple, polyisobutènes, polyméthacrylates, polyalkylstyrènes, copolymères partiellement hydrogénés du butadiène et du styrène, et copolymères amorphes d'éthylène et de propène.

Les additifs assurant le maintien de la propreté du carter sont d'une part les détergents tels que, par exemple, sulfonates, phénates, ou phosphates organiques de métal polyvalent, particulièrement efficaces pendant les marches "à chaud", et d'autre part les dispersants tels que, par exemple, les succinimides ou esters succiniques, alkylés par un polymère de l'isobutène ou du propène sur le carbone en alpha du carbonyle du succinimide, ces additifs travaillant plus particulièrement pendant les marches "à froid", qui sont celles des automobiles s'arrêtant fréquemment.

On a proposé également des additifs pour huiles lubrifiantes destinés à assurer simultanément l'amélioration de l'indice de viscosité des huiles et la dispersion des boues qu'elles peuvent renfermer. De tels composés sont, par exemple, obtenus par introduction de monomères azotés soit par copolymérisation, soit par greffage sur un polymère épaississant. Les monomères dispersants azotés sont de préférence choisis parmi les maleimides, vinylimidazolines, vinylpyrrolidones, vinylpyridines ou N,N-dialkylaminoéthylméthacrylates. Les brevets suivants revendiquent l'utilisation de tels composés: EP 171 167, EP 167 195, EP 164 807, EP 145 369, US 4 606 834, US 3 732 334, BE 874 068.

Néanmoins dans les lubrifiants, on recherche des additifs multifonctionnels présentant d'autres propriétés que améliorants de viscosité et dispersants. En particulier les formulateurs recherchent de plus en plus des additifs présentant une grande stabilité thermique et une résistance à l'oxydation importante en raison de la sévérité grandissante des conditions de fonctionnement des moteurs. On observe ainsi une augmentation de la température de travail du lubrifiant, particulièrement dans les moteurs diesels soumis à de fortes charges où la température en haut du piston, au voisinage de la première gorge peut atteindre, voire dépasser 350°C. Les lubrifiants ont tendance à s'oxyder lorsqu'ils sont soumis a ces températures élevées.

Cette décomposition est proportionnelle à la stabilité thermique et la résistance à l'oxydation de l'huile et des additifs. Elle donne lieu à la formation et au dépôt de composés résineux et de substances charbonneuses sur les parois du piston. Si ces dépôts deviennent trop importants, ils peuvent initier un gommage ou un grippage du piston et augmenter l'usure des pièces métalliques en mouvement. Il est donc important de contrôler et de limiter au mieux ces dépôts en utilisant des additifs efficaces et stables à températures élevées.

Dans l'art antérieur, la protection des huiles lubrifiantes par des molécules organiques antioxydantes est largement décrite. On distingue en général ces composés selon leur mode d'action : d'une part les inhibiteurs de radicaux libres (phénols encombrés, amines aromatiques, phénothiazines...) et d'autre part les produits qui détruisent les péroxydes (dithiophosphates ou dithiocarbamates métalliques).

On connaît également les désactivateurs métalliques comme par exemple le mercaptobenzothiazole qui protègent les lubrifiants de l'oxydation catalytique des ions métalliques tels que les ions cuivreux ou cuivriques. Ces composés agissent par passivation des surfaces ou par chélatation des métaux présent dans l'huile.

L'utilisation des molécules antioxydantes de faible poids moléculaire peut présenter plusieurs inconvénients; en particulier ces produits ont une solubilité limitée dans l'huile et sont parfois volatils ou sublimables lorsque le moteur fonctionne à un régime proche de son régime maximum.

Ces inconvénients peuvent être éliminés en utilisant des polymères améliorants de viscosité qui portent des fonctions antioxydantes. Un autre avantage de ces polymères multifonctionnels est de concentrer les structures antioxydantes portées par le polymère dans les parties supérieures du moteur lors des évaporations "flash" de l'huile, où la protection contre l'oxydation et la plus nécessaire.

Les polymères améliorants de viscosité et antioxydant sont connus dans l'art antérieur.

Le brevet US 4 500 440 revendique un copolymère éthylène-propylène porteur de fonctions époxydes obtenues par greffage du méthacrylate de glycidyle et traité par l'amino-5-tétrazole.

Les demandes de brevet européen 199 453 et 20164 décrivent l'introduction de molécules à effet antioxydant, comme la phénothiazine, ou des bases de Schiff formées à partir d'aldehydes et des hétérocycles azotés, comme la pyrrolidine, la morpholine ou la piperazine sur des copolymères ethylène-propylène. Ces deux brevets décrivent des procédés de préparation de polymères antioxydants faisant intervenir une étape de greffage du monomère antioxydant en présence d'initiateurs de radicaux libres.

Ce procédé présente deux inconvénients majeurs, d'une part le monomère antioxydant peut, de par sa fonction, réagir avec les péroxydes et d'autre part former des homopolymères. Ces deux réactions secondaires donnent lieu à la formation de sous-produits inutilisables et difficilement séparables.

La demande de brevet européen 274589 décrit l'obtention de compositions lubrifiantes par condensation de mélanges de phénothiazine et de N-méthylpiperazine sur des copolymères d'esters méthacryliques et d'anhydride maléique. Cette synthèse est limitée par la faible réactivité de la phénothiazine. Une quantité importante de phénothiazine non réagie reste dispersée dans le concentré du polymère et peut générer ultérieurement des dépôts dans le moteur.

Dans le brevet US-3702300, l'additif revendiqué est obtenu par réaction de copolymères styrène/anhydrique maléique, partiellement estérifiés, avec une polyamine comprenant au moins un groupement amine primaire NH₂ ou secondaire NH. On fait référence aux composés polyamines aromatiques ou aliphatiques et de préférence aux amines hétérocycliques. Bien que les amines revendiquées dans la demande modifiée puissent être couvertes par la généralité de cette définition, elles ne sont pas décrites en tant que telles pour les fonctions de dispersant et d' antioxydant en combinaison avec les sites anhydrides maléïques des copolymères, mais pour l'existence de l'extrémité amine primaire qui réagit sur ces sites, et confère à l'additif une propriété dispersante.Dans D7, aucun exemple n'est donné sur ce type de composé.

Dans le brevet US-4160739, il s'agit d'un additif pour lubrifiant moteur constitué par des copolymères éthylène-propyléne porteurs de greffons anhydride maléïque fonctionnalisés par une polyamine présentant un groupement NH ou un groupement NH₂. Les copolymères greffés confèrent aux lubrifiants des propriétés dispersantes, détergentes et VI-improvers. Parmi les polyamines mentionnées en colonne 6, ligne 53 à colonne 7, ligne 29. on peut remarquer que la N-aminoéthylphénothiazine ou les amines dérivées de la phénothiazine sont mentionnés du fait de l'effet dispersant conféré par le groupement NH ou NH₂ qu'elles comprennent. A cet effet, on note que les inventeurs préconisent par ailleurs l'ajout d'antioxydant dans les lubrifiants ainsi additivés (colonne 9 lignes 20 à 47) parmi lesquels ne figurait pas la phénothiazine.

Nous avons trouvé maintenant une famille de composés polymériques utilisables comme additifs multifonctionnels aux lubrifiants qui ne présente pas cet inconvénient. Ces composés améliorent la viscosité des lubrifiants tout en remplissant le rôle de dispersant et d'antioxydant.

Les composés polymériques, utilisables comme additifs multifonctionnels aux lubrifiants résultent de la condensation d'une amine primaire ou secondaire et/ou d'une alkylène polyamine de formule générale 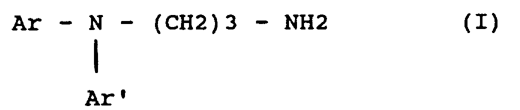 où - Ar est un radical aromatique et Ar' est soit un atome d'hydrogène soit un deuxième radical aromatique formant éventuellement avec Ar et l'azote auquel ils sont rattachés, une structure hétérocyclique sur un copolymère ayant des groupements carboxyliques vicinaux et dont la masse moléculaire moyenne en poids est ≥ 20000.

Dans la formule I d'un mode de réalisation, Ar est un radical naphtyle et Ar' un atome d'hydrogène.

Ainsi de préférence, l'alkylène polyamine de formule générale I peut être la N.aminopropyl-2-naphtylamine.

Dans une autre forme préférée de l'invention, dans la formule générale (I), l'atome d'azote reliant Ar et Ar' peut faire partie d'un hétérocycle, cet hétérocycle constituant le radical phénothiazinyle.

Parmi les dérivés de la phénothiazine, on utilise préférentiellement l'aminopropyle-10-phénothiazine, l'aminopropylamino-3-phénothiazine.

Le copolymère ayant des groupements carboxyliques vicinaux est obtenu par copolymérisation ou greffage d'un acide alpha-béta-dicarboxylique insaturé sous forme de diacide ou d'anhydride.

On utilise en général un dérivé de l'anhydride maléique, comme l'anhydride maléique lui-même, l'anhydryde chloromaléique ou l'anhydride itaconique.

En cas de synthèse par copolymérisation directe, les acides alpha-béta-dicarboxyliques insaturés sont copolymérisés avec au moins un ester d'un monoacide ou d'un diacide insaturé. Ces esters sont en général choisis parmi les (méth)acrylates, les maléates ou les fumarates estérifiés par des alcools en C₁ à C₂₂. On peut citer comme exemples les (méth)acrylates de méthyle, d'éthyle, de n-butyle, d'éthyl-2-hexyle, octyle, décyle, dodécyle, n-tétradécyle, n-hexadécyle ou n-octadécyle.

On utilisera avantageusement un mélange industriel de plusieurs (méth)acrylates d'alkyle ayant des longueurs de chaîne variables. Si le nombre d'atomes de carbone des chaînes alkyles est compris entre 6 et 15 et de préférence entre 8 et 13, le copolymère a un bon pouvoir épaississant et confère à l'huile un bon comportement à basse température.

Le copolymère peut renfermer d'autres monomères tels que des monomères azotés et/ou des monomères oléfiniques.

Le monomère azoté pouvant entrer dans la composition du copolymère répond de préférence à la formule générale :

CH₂=CR₂-CO-Y-R₃-NR₄R₅ (II)

où -R₂ est l'atome d'hydrogène ou le radical méthyle,
-Y représente un atome d'oxygène ou de soufre ou le groupe -NH-
-R₃ est un groupe alkylène en C₂ à C₆
-R₄ et R₅ identiques ou différents sont des radicaux alkyle, cycloalkyle, alkylaryle ou aryle. Il s'agit de préférence des radicaux méthyle et éthyle.

Comme exemple de monomères azotés (II) on peut citer le N,N-diméthylaminopropylméthacrylamide, le N,N-diéthylaminopropylméthacrylamide,le N,N-diméthylaminoéthylméthacrylamide, le N,N-diéthylaminoéthylméthacrylamide, le méthacrylate de N,N-diméthylaminoéthyle ou le méthacrylate de N,N-diéthylaminoéthyle.

Cependant d'autres monomères azotés, commes les vinylpyridines ou vinylpyrrolidones conviennent également.

Le monomère oléfinique pouvant entrer dans la composition des copolymères de l'invention répond à la formule générale

CH₂ = CZ₁Z₂ (III)

où Z₁ et Z₂, identiques ou différents représentent l'hydrogène, un un radical hydrocarboné saturé, insaturé ou
aromatique en C₁ à C₃₀, un groupement -O-CO-R′ (où R′ est un radical alkyl en C₁ à C₃), un groupement -OR˝(où R˝ est un radical alkyle en C₁ à C₁₂) ou un halogène, comme le fluor, le chlore ou le brome.

L'incorporation des composés alpha-béta-dicarboxyliques insaturés dans le copolymère est facilitée par la présence du monomère oléfinique. Parmi les monomères oléfiniques on peut mentionner l'éthylène, les alpha-oléfines, le chlorure de vinyle, le dichloro-1,1-éthylène, le styrène ou ses dérivés, les ethers de vinyle comme le méthylvinyléther et les esters de vinyle comme l'acétate ou le propionate de vinyle. Les monomères oléfiniques préférés sont l'éthylène, le styrène et l'acétate de vinyle. On utilisera avantageusement le styrène.

Les copolymères selon l'invention renferment 20 à 99 % en poids et de préférence 70 à 95 % d'esters (méth)acryliques, 0,1 à 10 %, de préférence 1 à 8 % d'anhydride maléique, 0 à 10 %, de préférence 1 à 8 % d'un monomère oléfinique, 0 à 10 %, de préférence 1 à 7 % d'un monomère azoté.

La masse moléculaire moyenne en poids de ces copolymères est comprise entre 20000 et 500000 et de préférence entre 50000 et 200000.

Le copolymère peut également être préparé par greffage d'un acide alpha-béta-dicarboxylique insaturé sur un polymère hydrocarboné ou un poly(méth)acrylate.

Parmi ces acides insaturés on utilise en général les dérivés de l'anhydride maléique, comme l'anhydride maléique lui-même, l'anhydride chloromaléique ou l'anhydride itaconique. On utilisera avantageusement l'anhydride maléique, car le greffage se fait dans des conditions douces sans formation de homopolymères comme sous-produits.

Le polymère hydrocarboné peut être choisi parmi les copolymères de l'éthylène, les homo et copolymères diéniques et les homopolymères d'alpha-oléfines.

Les polymères hydrocarbonés préférés sont des copolymères de l'éthylène. Ils contiennent en général de 15 à 90 % et de préférence de 25 à 80 % poids d'éthylène et 0 à 20 % poids d'un diène non-conjugué, le complément provenant d'au moins une alpha-oléfine en C₃ à C₂₄.

Les diènes non-conjugués linéaires ou cycliques sont en général choisis parmi l'hexadiène-1,4, le méthyl-2-pentadiène-1,4, le cyclopentadiène-l,4, le cyclooctadiène-1,5 et les dérivés du norbornène tel que le méthylène-5-norbornène-2.

Parmi les alpha-oléfines ont peut citer le propylène, le butène, le pentène, l'heptène, l'octène, le nonène, le décène, le méthyl-4-pentène, le méthyl-5-pentène. Les copolymères d'éthylène renferment en général de une à trois de ces alpha-oléfines.

Parmi les copolymères d'éthylène on utilise de préférence les copolymères éthylène-propylène.

Ces copolymères sont sensiblement amorphes et ils possèdent une masse moléculaire moyenne en poids comprise entre 20000 et 500 000, de préférence entre 50000 et 200000 et une polydispersité inférieure à 10, de préférence inférieure à 4.

Les copolymères diéniques sont préparés par copolymérisation de deux dioléfines comme le butadiène, l'isoprène ou le diméthyl-2,2-butadiène ou la copolymérisation d'une di-oléfine avec le styrène.
Comme exemples de copolymères diéniques on peut citer les copolymères butadiène-styrène ou butadiène-isoprène. Ces copolymères sont utilisés de préférence sous forme hydrogénée pour réduire les insaturations oléfiniques et par conséquence leur sensibilité à l'oxydation.

Parmi les homopolymères diéniques on peut mentionner les polymères du butadiène, de l'isoprène ou du diméthyl-2,3-butadiène.

Les homopolymères d'alpha-oléfines sont issus d'alpha-oléfines renfermant au moins quatre atomes de carbone. Parmi ces homopolymères le plus important est le polyisobutylène.

Les poly(méth)acrylates sont préparés en général par polymérisation d'un mélange d'esters en C₁ à C₂₁ de l'acide (méth)acrylique.

Aussi bien les polymères hydrocarbonés que les poly(méth)acrylates peuvent renfermer des monomères azotés, tels que les monomères répondant à la formule générale (II) ou bien d'autres monomères comme les vinylpyridines ou vinylpyrrolidones.

Les polyalkylène diamines de formule générale (I) peuvent être préparés par toutes les méthodes connues dans l'art antérieur. Ainsi on prépare la N-aminopropylphénothiazine par condensation de la phénothiazine avec l'acrylonitrile dans les conditions de la cyanoéthylation avec une quantité d'acrylonitrile supérieure à la quantité théorique en présence d'un catalyseur alcalin tel que le triton B (hydroxyde de benzyltriméthyl ammonium) en solution méthanolique tel que décrit par N.L. SMITH (J. Org. Chem 15,1129, 1950). L'intermédiaire est ensuite réduit en N- aminopropylphénothiazine par hydrogénation catalytique dans un autoclave sous pression d'hydrogène et d'ammoniac ou par réduction chimique avec un hydrure comme le suggère le brevet français 2 165 797.

Le remplacement de l'acrylonitrile, par l'acrylamide, le chloroacétamide, l'iodoacétamide ou encore le chloro-3-propionitrile donne des dérivés analogues de la phénothiazine.

La copolymérisation de l'acide alpha-béta-dicarboxylique insaturé avec les esters insaturés et éventuellement les autres monomères se fait selon les méthodes classiques de polymérisation par voie radicalaire en solution, en présence d'un amorceur radicalaire du type azobisisobutyronitrile ou péroxyde comme le péroxyde de benzoyle ou de lauryle et d'un agent de transfert de chaîne comme le dodécyl-mercaptan. Le solvant peut être un solvant aromatique comme le toluène ou les xylènes ou une huile minérale ou synthétique de même nature que celle laquelle le polymère doit être ajouté. On utilise environ 0,01 à 0,32 mole d'acide insaturé, 0,7 à 0,99 mole d'ester, 0 à 0,3 mole de monomère azoté et 0 à 0,32 mole de monomère oléfinique.

La quantité de solvant sera en général telle que la concentration pondérale en matière sèche, à la fin de la réaction, soit comprise entre 30 et 70 % et de préférence environ 50 %.

La réaction est effectuée à une température comprise entre 40 et 140°C et de préférence entre 80 et 120°C. Selon les conditions opératoires la durée de la réaction peut varier de 2 à 10 heures, de préférence 3 à 5 heures.

On obtient le copolymère sous la forme d'une solution visqueuse.

Pour le greffage de l'acide alpha-béta dicarboxylique insaturé sur un polymère hydrocarboné ou un poly(méth)acrylate on peut utiliser toute méthode connue pour fixer un monomère insaturé sur une structure polymérique. En général le polymère est dissous dans un solvant hydrocarboné. Cette solution additionnée d'un générateur de radicaux libres est portée à la température du greffage et maintenue à cette température pendant un temps suffisant pour former des sites actifs sur le copolymère. L'acide insaturé, de préférence l'anhydride maléique est ajouté en quantité convenable. On utilise en général 0,1 à 20% poids et de préférence 1 à 10 % poids d'acide alpha-béta-dicarboxylique insaturé par rapport au polymère hydrocarboné.

Le polymère greffé peut ensuite être isolé par évaporation du solvant. Il est également possible de préparer le polymère greffé dans une huile. Il n'est alors pas nécessaire d'isoler le polymère qui est recueilli sous forme d'une solution concentrée dans l'huile à laquelle on ajoutera l'amine primaire.

Le greffage de l'anhydride maléique sur un polymère oléfinique en phase solvant est décrit dans les brevets américains : 4 144 181 et 4 137 185 alors que le brevet américain 3 862 265 et les brevets britaniques 1 119 629, 857 797 et 832 193 décrivent un procédé de greffage en absence de solvant par mastication en présence ou en absence d'oxygène.

Pour inhiber les réactions de réticulation lors du greffage, le brevet américain 4 160 072 et la demande de brevet européen 171 167 préconisent l'emploi d'agents de transfert de chaîne, comme les mercaptans, en association avec des promoteurs radicalaires.

La condensation du copolymère fonctions acides carboxyliques vicinaux avec l'alkylène polyamine de formule générale (I) est réalisée dans un solvant organique ou dans une huile à une température comprise entre 90 et 170°C pendant 3 à 8 heures. On utilise en général 0,5 à 2, de préférence 1 mole d'alkylène polyamine par fonctions acides carboxyliques vicinaux du polymère. Si l'alkylènepolyamine est utilisée en mélange avec une amine primaire ou secondaire, on utilise en général 0,2 à 1 mole de cette dernière par mole de polyamine de formule générale (I).

On peut envisager de faire réagir des alkylène polyamines de formule générale (I) avec des polymères ayant des fonctions acides carboxyliques non pas vicinales mais isolées. Cependant, le taux d'incorporation des polyamines reste plus faible.

La concentration des produits ainsi obtenus dans les compositions lubrifiantes prêtes à l'emploi est généralement de l'ordre de 0,2 à 15 % et de préférence de 1 à 10 % en poids.

Toutefois des concentrations plus élevées, par exemple 15 à 50 % peuvent être envisagées, lorsque la composition lubrifiante se présente sous la forme d'un concentré à diluer au moment de l'emploi.

L'additif peut être incorporé dans les huiles lubrifiantes naturelles ou synthétiques ou bien des mélanges de telles huiles. A titre d'exemple on peut citer des huiles minérales ordinaires ou raffinées de composition paraffinique ou naphténique et les huiles hydroraffinées. Les huiles synthétiques, comme les polybutènes, les alkylbenzènes tels que le dinonylbenzène et le tetradécylbenzène, les éthers ou esters de polypropylèneglycols, les esters d'acides polycarboxyliques tels que l'adipate de méthyle et l'heptanoate de pentaérythritol, les huiles de silicone telles que les polysiloxanes, les esters totaux ou partiels de l'acide phosphorique notamment le tricrésylphosphate et les acides alkylphosphoriques conviennent également.

Il est possible d'associer les composés polymériques selon l'invention avec d'autres additifs usuels des lubrifiants comme des inhibiteurs de corrosion, les détergents et des additifs antiusure, dispersant et antimousse.

Les compositions lubrifiantes renfermant le composé polymérique selon l'invention sont utilisables notamment comme huiles pour carters destinées aux moteurs à combustion interne, comme huiles pour carter de pont, comme huiles pour engrenage et pour faciliter l'usinage des métaux.

Les exemples suivants illustrent l'invention sans toutefois la limiter.

### EXEMPLE 1

### a) (préparation de la N-aminopropylphénothiazine).

Dans un réacteur contenant 100 g (0,5 mole) de phénothiazine et 530 g (10 moles) d'acrylonitrile, et refroidi à une température inférieure à 10°C, on ajoute goutte à goutte 2,5ml d'une solution méthanolique à 40 % d'hydroxyde de benzyltriméthylammonium. L'ensemble est chauffé à 80°C pendant 1 heure 30mn. L'excès d'acrylonitrile est éliminé par distillation sous vide. Le solide est recristallisé deux fois dans l'acétone. Le phénothiazinyl-10-propionitrile est obtenu avec un rendement de 66 % (83,9g) PF: 156-157°C).

50,6 g de ce produit sont placés dans un Soxhlet et sont extrait, en continu par 1000 ml d'éther contenant 16 g d'hydrure et lithium et d'aluminium. Après 72 heures de réaction la solution éthérée est traitée sucessivement par 16 ml d'eau, 12 ml de soude à 25 % et deux fois 50 ml d'eau. Après filtration des sels insolubles, la N- aminopropylphénothiazine est obtenue après séchage et distillation de l'éther (rendement 70 %).

### b) (préparation du copolymère).

Dans un réacteur muni d'un réfrigérant et d'une arrivée de gaz inerte, on introduit sous agitation mécanique les réactifs suivants :

| | |
|---|---|
| méthacrylate de méthyle | 9,02g (0,0902 mole) |
| méthacrylate de lauryle | 137,46g (0,5412 mole) |
| méthacrylate de stéaryle | 60,98g (0,1804 mole) |
| anhydride maléique | 4,42g (0,0451 mole) |
| styrène | 4,69g (0,0451 mole) |
| hexane | 40ml |
| toluène | 40ml |
| dodécane thiol | 0,131 g |
| huile minérale 150 Neutral Solvant | 39,58 g |

On chauffe à 80-63°C pendant 1 heure en faisant passer un courant d'azote; on introduit alors 0,384 g d'azobisisobutyronitrile (AIBN). La température s'élève à 92°C puis se stabilise vers 83-85°C. On maintient cette température pendant 3 heures.

On rajoute 0,050 g de catalyseur AIBN et on chauffe le mélange à 100°C pendant 1 heure. On rajoute encore 0,025 g d'AIBN et 144,7 g d'huile minérale 150 NS et on maintient le mélange à 100°C pendant 1 heure. On évapore ensuite le solvant par distillation sous vide. On obtient alors une solution d'un copolymère à 54 % dans l'huile minérale (n_{D}20 = 1,480, viscosité à 20C. = 89 Pa.s

### c) (condensation de l'amine sur le copolymère)

Dans un Erlen de 500 ml équipé d'un Dean Stark, on introduit 49,55 g de la solution de copolymère préparée en 1b et 460 ml de toluène. On ajoute goutte à goutte une solution de 1,4 g de N aminopropylphenothiazine (Ia) dans 58ml de toluène. On chauffe 5 heures à 110°C, puis 1 heure à 160°C tout en distillant le toluène. On rajoute alors 5,37 g d'huile minérale 150 NS et on évapore le solvant sous vide.

En spectroscopie IR on observe la disparition des bandes anhydride (1785 cm⁻¹) et l'apparition de la bande imide (1705 cm⁻¹).

On obtient ainsi une solution d'un copolymère à 50 % de matière active dans une huile minérale 150 NS, contenant 1,28 10⁻⁴ mole de phénothiazine par g et constituant l'additif I.

### EXEMPLE II (greffage de l'anhydride maléique sur un copolymère éthylène-propylène).

Dans la chambre de malaxage munie de vis contrerotatives tournant à une vitesse de 40 tours/mn d'un appareil de type BRABENDER-Plasticorder, on fait "fondre" 40 g de copolymère éthylène-propylène (EP 2590 Total -50 % poids polypropylène, masse moléculaire en poids d'environ 100.000), pendant au moins 15 mn à 120°C. 6,7 g d'anhydride maléique sont mélangés à sec avec 2 g d'octadécanamide utilisé comme inhibiteur de formation de produits insolubles, puis ajoutés en petite quantité progressivement dans le mélange "fondu". Un dispositif permet de fermer la chambre de malaxage et d'éviter ainsi la perte d'anhydride maléique par sublimation.

On ajoute alors en plusieurs fois le peroxyde : 0,6 g de peroxyde de dicumyle toutes les 5 minutes pendant 30 minutes (3,6 g au total). On termine la réaction en laissant encore 15 mn à 120°C, avec un léger courant d'azote qui permet d'enlever l'anhydride non greffé.

Le taux de greffage est de 2 %. Il est déterminé par réaction en milieu toluène du polymère greffé avec de l'octylamine en excès, puis dosage de l'octylamine non réagi par une solution alcoolique d'acide chlorhydrique. Le polymère greffé est parfaitement soluble dans le xylène, le toluène et les huiles 150N, 200N.

### b) Condensation de la N-aminopropylphénothiazine :

Dans un réacteur de 1 litre muni d'un Dean-Stark, on dissout à 120°C 40 g de copolymère maléisé de l'essai précédent dans 360 g d'huile 150NS et 300 g d'huile 200NS, sous agitation pendant au moins 10 heures.

Le mélange est refroidi à 90°C : on ajoute alors 2,10 g de N-amino-propylphénothiazine, de l'exemple Ia, dissous dans 60 cm³ d'acétone. La réaction est maintenue une heure à cette température puis à 130°C pendant au moins 3 heures sous un léger courant d'azote.

La solution obtenue renferme 5,7 % de polymere modifié et 0,3 % de phénothiazine (0,12 x 10⁻⁴ moles par g de solution). Une solution à 1 % de ce polymère modifié, dans les huiles 150NS et 200NS, a une viscosité de 99,2. 10⁻⁶m/s et 12,9. 10⁻⁶m/s, respectivement à 40° et 100°C.

Les essais de stabilité thermique décrit dans l'exemple IV ont été effectués sur la solution brute à 5,7 % de polymère (III.1) et la solution diluée à 1 % de polymère (III.2).

### EXEMPLE III (comparatif)

Dans un erlen de 500 ml muni d'un Dean Stark, on verse 128 g de la solution de polymère préparée en la et 325 ml de toluène, on ajoute goutte à goutte 1,47 g de diméthyl amino propylamine. On porte à reflux pendant 4 heures sous azote jusqu'à ce que la formation d'eau n'évolue plus.

On obtient alors une solution d'un copolymère à 54,4 % de matière active dans l'huile minérale 150 Neutral Solvant et constituant l'additif II (viscosité à 20°C = 107 Pa.s)

### EXEMPLE IV (comparatif)

Dans un erlen de 100 ml, équipé d'un Dean Stark et d'un réfrigérant, on introduit successivement 31,3 g de la solution du copolymère préparée selon l'exemple Ib, 70 ml de xylène et 0,7 g de phénothiazine. L'ensemble est chauffé à reflux sous agitation pendant 8 heures. Après distillation du solvant, le chauffage est maintenu à 165-170°C. pendant encore 10 heures. Après réaction, le taux de fonctionnalisation des groupements anhydrides du polymère, déterminé par spectroscopie infra-rouge, est égal à 14 % seulement.

### EXEMPLE V (comparatif)

On opère comme dans l'exemple IV mais en rajoutant 0,2 g de morpholine. Après réaction, le taux de greffage déterminé comme précédemment reste inférieur à 70 %.

### EXEMPLE VI

On évalue la stabilité thermique des solutions de polymères des exemples de l'invention par analyse calorimétrique différentielle. On chauffe un échantillon de 2 mg d'une solution de polymère en établissant une montée en température de 5°C/mn et sous un débit de 5 litres d'oxygène par heure.

On relève la température à partir de laquelle il apparaît un phénomène thermique indiquant un début d'oxydation du polymere. Plus cette température est élevée plus les polymères sont stables thermiquement.

**TABLEAU I**

| | T début oxydation °C |
|---|---|
| Polymère Exemple Ia (comparatif) | 176 |
| Polymère Exemple Ib | 230 |
| Polymère Exemple II (comparatif) | 159 |
| Polymère Exemple III₁ | 270 |
| Polymère Exemple III₂ | 234 |

### EXEMPLE VII

Dans cet exemple on évalue la stabilité à l'oxydation de compositions lubrifiantes contenant un additif polymérique de l'invention.

Les essais sont réalisés à 160°C en utilisant une bombe pressurisée à l'oxygène en présence d'un catalyseur métallique, d'un catalyseur carburant et d'eau, de façon à simuler en partie les conditions auxquelles l'huile peut être soumise dans un moteur à essence.

Le catalyseur métallique est un mélange de naphtenates oleosubles de Pb, Cu, Fe, Mn et Sn.

La stabilité à l'oxydation des lubrifiants est appréciée par la mesure du temps d'induction c'est -à-dire le temps entre le début de l'essai et le début de la chute rapide de la pression dans la bombe. Plus le temps est élevé, plus les compositions lubrifiantes sont protégées de l'oxydation.

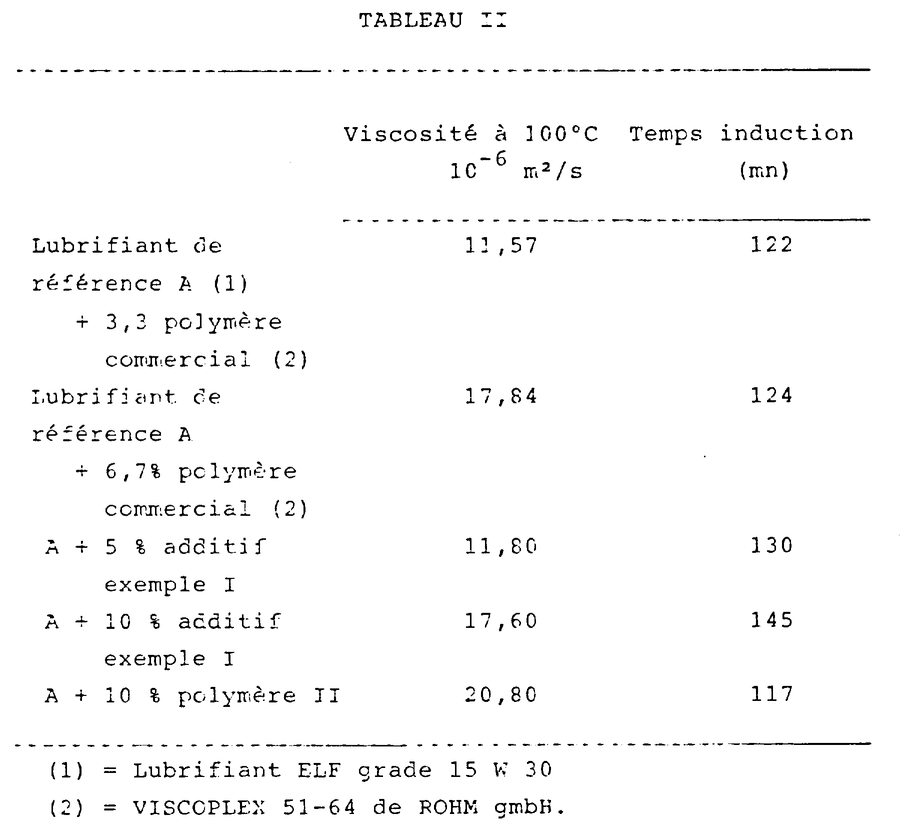

## Revendications

1. Additifs polymériques multifonctionnels aux lubrifiants, caractérisés en ce qu'ils résultent de la condensation d'une alkylène polyamine de formule générale 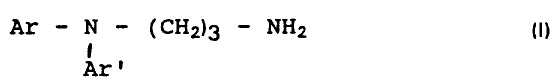 où Ar est un radical aromatique et Ar' est soit un atome d'hydrogène soit un deuxième radical aromatique formant éventuellement avec Ar et l'atome d'azote auquel ils sont rattachés une structure hétérocyclique, sur un copolymère ayant des groupements carboxyliques vicinaux et dont la masse moléculaire moyenne en poids est ≥20.000.

2. Additifs selon la revendication 1 caractérisés en ce que dans la formule générale (I) Ar est un radical naphtyle et Ar' un atome d'hydrogène.

3. Additifs selon la revendication 2 caractérisés en ce que l'alkylènepolyamine de formule générale (I) est le N-aminopropyl-2-naphtylamine.

4. Additifs selon la revendication 1 caractérisés en ce que dans la formule générale (I) Ar et Ar' sont reliés entre eux pour former avec l'azote auquel ils sont rattachés le radical phénothiazinyle.

5. Additifs selon la revendication 4 caractérisés en ce que l'alkylène polyamine de formule générale (I) est l'aminopropyl-10-phénothiazine, ou l'aminopropylamino-3-phénothiazine.

6. Additifs selon l'une des revendications 1 à 5 caractérisés en ce que le copolymère ayant des groupements carboxyliques vicinaux est obtenu par copolymérisation ou greffage d'un acide alpha-béta-dicarboxylique insaturé sous forme de diacide ou d'anhydride.

7. Additifs selon la revendication 6 caractérisés en ce que l'acide alpha-béta-dicarboxylique insaturé est un dérivé de l'anhydride maléïque, comme l'anhydride maléïque lui-même, l'anhydride chloromaléïque et l'anhydride itaconique.

8. Additifs selon l'une des revendications 1 à 6 caractérisés en ce que le polymère est obtenu par copolymérisation d'un dérivé de l'anhydride maléïque avec au moins un ester d'un monoacide ou d'un diacide insaturé.

9. Additifs selon la revendication 8 caractérisés en ce que l'ester est choisi dans le groupe constitué par les (méth)acrylates, les maléates et les fumarates de C₁ à C₂₂, tels que les (méth)acrylates de méthyle, d'éthyle, de n-butyle, d'éthyl-2-hexyle, d'octyle, de décyle, de dodécyle, de n-tétra-décyle, de n-hexadécyle ou de n-octadécyle.

10. Additifs selon la revendication 9 caractérisés en ce que l'ester est un mélange industriel de plusieurs (méth)acrylates, comprenant des chaînes alkyles de C₆ à C₁₅, et de préférence des chaînes alkylées de C₈ à C_{13.}

11. Additifs selon l'une des revendications 8 à 10 caractérisés en ce que le copolymère renferme des monomères azotés et/ou des monomères oléfiniques.

12. Additifs selon la revendication 11 caractérisés en ce que le monomère azoté répond à la formule générale
CH₂ = CR₂ - CO - Y - R₃ - NR₄ R₅ (II)
où
- R₂ est l'atome d'hydrogène ou le radical méthyle
- Y représente un atome d'oxygène ou de soufre ou le groupe - NH -
- R₃ est un groupe alkylène de C₂ à C₆
- R₄ et R₅ identiques ou différents sont des radicaux choisis dans le groupe constitué par les groupements alkyles, cycloalkyles, alkylaryles et aryles de préférence par les groupements méthyle et éthyle.

13. Additifs selon la revendication 12 caractérisé en ce que le monomère azoté de formule générale (II) est choisi parmi le N,N-diméthylaminopropylméthacrylamide, le N,N-diéthylaminopropylméthacrylamide, le N,N-diméthylaminoéthylméthacrylamide, le N,N-diéthylaminoéthylméthacrylamide, le méthacrylate de N,N-diméthylaminoéthyle ou le méthacrylate de N,N-diéthylaminoéthyle.

14. Additifs selon la revendication 11 caractérisés en ce que le monomère azoté est choisi parmi les vinylpiridines et les vinylpyrrolidones.

15. Additifs selon la revendication 11 caractérisés en ce que le monomère oléfinique répond à la formule générale
CH₂ = CZ₁ Z₂ (III)
où Z₁ et Z₂ identiques ou différents représentent l'hydrogène, un radical hydrocarboné saturé, insaturé ou aromatique de C₁ à C₃₀, un halogène comme le fluor, le chlore ou le brome, un groupement -O-CO-R' (où R' est un radical alkyle de C₁ à C₃) ou un groupement -OR"(ou R" est un radical alkyle de C₁ à C₁₂).

16. Additifs selon la revendication 15 caractérisés en ce que le monomère oléfinique de formule générale (III) est choisi dans le groupe constitué par l'éthylène, les alpha-oléphines, le chlorure de vinyle, le dichloro-1,1-éthylène, le styrène ou ses dérivés, les ethers de vinyle comme le méthylvinyléther et les esters de vinyle comme l'acétate ou le propionate de vinyle, de préférence parmi l'éthylène, le styrène ou l'acétate de vinyle.

17. Additifs selon la revendication 8 caractérisés en ce que le copolymère renferme à 99% poids d'esters (méth)acryliques, 0,1 à 10% d'anhydride maléïque, 1 à 8 % d'un monomère oléfinique, 1 à 7 % d'un monomère azoté et sa masse moléculaire moyenne en poids est comprise entre 20 000 et 500 000 et de préférence entre 50 000 et 200 000.

18. Additifs selon la revendication 6 caractérisés en ce que le copolymère ayant des groupements carboxyliques vicinaux est obtenu par greffage d'un acide alpha-béta dicarboxylique insaturé sur un polymère hydrocarboné ou un poly(méth)acrylate.

19. Additifs selon la revendication 18 caractérisés en ce que le polymère hydrocarboné est un copolymère de l'éthylène renfermant 15 à 90% poids d'éthylène, 0 à 20% poids d'un diène non-conjugué linéaire ou cyclique choisi parmi l'hexadiène-1,4, le méthyl-2-pentadiène-1,4, le cyclopentadiène-1,4, le cyclooctadiène-1,5 et les dérivés du norbornène tel que le méthylène-5-norbornène-2, le complément provenant d'au moins une alphaoléfine de C₃ à C₂₄, comme le propylène, le butène, le pentène, l'heptane, l'octène, le nonène, le décène, le méthyl-4-pentène et le méthyl-5-pentène.

20. Additifs selon la revendication 19 caractérisés en ce que le copolymère d'éthylène est un copolymère éthylène-propylène.

21. Additifs selon la revendication 19 caractérisés en ce que le copolymère d'éthylène a une masse moléculaire moyenne en poids en comprise entre 20 000 et 500 000, de préférence entre 50 000 et 200 000 et une polydispersité inférieure à 10, de préférence à 4.

22. Additifs selon la revendication 18 caractérisés en ce que le polymère hydrocarboné est un copolymère diénique préparé par copolymérisation de deux dioléfines comme le butadiène, l'isoprène ou le diméthyl-2,2-butadiène ou par la copolymérisation d'une de ces dioléfines avec le styrène notamment un copolymère butadiène-isoprène ou butadiène-styrène.

23. Additifs selon la revendication 18 caractérisés en ce que le polymère hydrocarboné est un homopolymère diénique, comme les polymères du butadiène, de l'isoprène ou du diméthyl-2,3-butadiène.

24. Additifs selon la revendication 18 caractérisés en ce que le polymère hydrocarboné est un homopolymère d'alpha-oléfines renfermant au moins 4 atomes de carbone et de préférence de polyisobutylène.

25. Additifs selon la revendication 18 caractérisés en ce que les poly(méth)acrylates sont préparés par polymérisation d'un mélange d'esters de C₁ à C₂₁ de l'acide (méth)acrylique.

26. Additifs selon l'une des revendications 18 à 25 caractérisés en ce que les polymères hydrocarbonés et les (méth)acrylates renferment un monomère azoté, comme les monomères de formule générale (II), les vinylpyridines et les vinylpyrrolidones.

27. Additifs selon l'une des revendications 1 à 26 caractérisés en ce que la condensation de l'alkylènepolyamine de formule générale (I) sur le copolymère à fonctions acides carboxyliques vicinaux est réalisée dans un solvant organique ou dans une huile, à une température comprise entre 90 et 170°C pendant 3 à 8 heures, en utilisant 0,5 à 2, de préférence 1 mole d'alkylène polyamine par fonctions acides carboxyliques vicinaux du copolymère.

28. Compositions lubrifiantes caractérisées en ce qu'elles renferment une proportion majeure d'une huile lubrifiante naturelle ou synthétique et une proportion mineure d'au moins un additif selon les revendications 1 à 27.

29. Compositions selon la revendication 28 caractérisées en ce qu'elles renferment 0,2 à 15% et de préférence 1 à 10% d'au moins un additif selon les revendications 1 à 27.

30. Compositions lubrifiantes concentrées caractérisées en ce qu'elles renferment 15 à 50% poids d'au moins un additif selon les revendications 1 à 27.

31. Compositions selon l'une des revendications 28 à 30 caractérisées en ce qu'elles renferment d'autres additifs usuels des lubrifiants comme des inhibiteurs de corrosion, des détergents et des additifs antiusure, dispersant et anti-mousse.

32. Additifs selon la revendication 17 caractérisés en ce que le copolymère renferme 70 à 95% en poids d'esters (méth)acryliques, 1 à 8 % d'anhydride maléïque, 1 à 8 % d'un monomère oléfinique, 1 à 7 % d'un monomère azoté et sa masse moléculaire moyenne en poids est comprise entre 20 000 et 500 000 et de préférence entre 50 000 et 200 000.

33. Additifs selon la revendication 18 caractérisés en ce que le copolymère ayant des groupements carboxyliques vicinaux est obtenu par greffage d'un dérivé de l'anhydride maléïque, comme l'anhydride maléïque lui-même, l'anhydride chloromaléïque ou l'anhydride itaconique sur le polymère hydrocarboné ou le poly(méth)acrylate.

34. Additifs selon la revendication 19 caractérisés en ce que le polymère hydrocarboné est un copolymère de l'éthylène renfermant 25 à 80% en poids d'éthylène, 0 à 20% poids du diène non-conjugué linéaire ou cyclique, le complément provenant d'au moins une des alphaoléfines de C₃ à C₂₄.

## Patentansprüche

1. Multifunktionale polymere Schmiermitteladditive, dadurch **gekennzeichnet**, daß man sie durch Kondensation eines Alkylenpolyamins der allgemeinen Formel 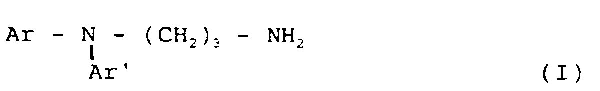 worin Ar einen aromatischen Rest und Ar' entweder ein Wasserstoffatom oder einen zweiten aromatischen Rest bedeuten, der gegebenenfalls mit Ar und dem Stickstoffatom, an das sie gebunden sind, eine heterocyclische Struktur bildet, mit einem Copolymer mit vicinalen Carboxylgruppen, dessen Gewichtsmittel des Molekulargewichts ≥ 20.000 beträgt, erhält.

2. Additive nach Anspruch 1, dadurch **gekennzeichnet**, daß in der allgemeinen Formel (I) Ar ein Naphthylrest ist und Ar' ein Wasserstoffatom.

3. Additive nach Anspruch 2, dadurch **gekennzeichnet**, daß das Alkylenpolyamin der allgemeinen Formel (I) N-Aminopropyl-2-naphthylamin ist.

4. Additive nach Anspruch 1, dadurch **gekennzeichnet**, daß in der allgemeinen Formel (I) Ar und Ar' miteinander so verknüpft sind, daß sie mit dem Stickstoff, an den sie gebunden sind, den Phenothiazinylrest bilden.

5. Additive nach Anspruch 4, dadurch **gekennzeichnet**, daß das Alkylenpolyamin der allgemeinen Formel (I) Aminopropyl-10-phenothiazin oder Aminopropylamino-3-phenothiazin ist.

6. Additive nach einem der Ansprüche 1 bis 5, dadurch **gekennzeichnet**, daß das Copolymer mit vicinalen Carboxylgruppen erhalten wird durch Copolymerisation oder durch Aufpfropfen einer ungesättigen α-β-Dicarbonsäure in Form einer zweibasigen Säure oder eines Anhydrids.

7. Additive nach Anspruch 6, dadurch **gekennzeichnet**, daß die ungesättigte α-β-Dicarbonsäure ein Derivat des Maleinsäureanhydrids ist, wie z.B. das Maleinsäureanhydrid selbst, Chlormaleinsäure- und Itaconsäureanhydrid.

8. Additive nach einem der Ansprüche 1 bis 6, dadurch **gekennzeichnet**, daß das Polymer erhalten wird durch Copolymerisation eines Derivats des Maleinsäureanhydrids mit wenigstens einem Ester einer einbasigen oder einer ungesättigten zweibasigen Säure.

9. Additive nach Anspruch 8, dadurch **gekennzeichnet**, daß der Ester ausgewählt wird aus der Gruppe, bestehend aus C₁₋₂₂-(Meth)acrylaten, -Maleaten und -Fumaraten wie Methyl-, Ethyl-, n-Butyl-, Ethyl-2-hexyl, Octyl-, Decyl-, Dodecyl-, n-Tetradecyl, n-Hexadecyl oder n-Octadecyl-(meth)acrylaten.

10. Additive nach Anspruch 9, dadurch **gekennzeichnet**, daß der Ester ein technisches Gemisch aus mehreren (Meth)acrylaten mit C₆₋₁₅- und vorzugsweise C₈₋₁₃- Alkylketten ist.

11. Additive nach einem der Ansprüche 8 bis 10, dadurch **gekennzeichnet**, daß das Copolymer stickstoffhaltige Monomere und/oder Olefinmonomere enthält.

12. Additive nach Anspruch 11, dadurch **gekennzeichnet**, daß das stickstoffhaltige Monomer die allgemeine Formel
CH₂ = CR₂ - CO - Y - R₃ - NR₄R₅ (II)
hat, wobei R₂ ein Wasserstoffatom oder einen Methylrest, Y ein Sauerstoff- oder Schwefelatom oder die Gruppe - NH -, R₃ eine C₂₋₆-Alkylengruppe und
R₄ und R₅ gleiche oder unterschiedliche Reste bedeuten, ausgewählt aus der Gruppe, bestehend aus Alkyl-, Cycloalkyl-, Alkylaryl- und Arylgruppen und vorzugsweise aus Methyl- und Ethylgruppen.

13. Additive nach Anspruch 12, dadurch **gekennzeichnet,** daß das stickstoffhaltige Monomer der allgemeinen Formel (II) ausgewählt ist aus der Gruppe, bestehend aus N,N-Dimethylaminopropylmethacrylamid, N,N-Diethylaminopropylmethacrylamid, N,N-Dimethylaminoethylmethacrylamid, N,N-Diethylaminoethylmethacrylamid, N,N-Dimethylaminoethylmethacrylat oder N,N-Diethylaminoethylmethacrylat.

14. Additive nach Anspruch 11, dadurch **gekennzeichnet**, daß das stickstoffhaltige Monomer ausgewählt ist aus Vinylpyridinen und Vinylpyrrolidonen.

15. Additive nach Anspruch 11, dadurch **gekennzeichnet**, daß das Olefinmonomer die allgemeine Formel
CH₂ = CZ₁Z₂ (III)
hat, wobei Z₁ und Z₂ gleiche oder unterschiedliche Bedeutung haben und für Wasserstoff, einen gesättigten, ungesättigten oder aromatischen C₁₋₃₀-Kohlenwasserstoffrest, ein Halogen wie Fluor, Chlor oder Brom, eine -O-CO-R'-Gruppe, worin R' einen C₁₋₃-Alkylrest bedeutet, oder eine -OR"-Gruppe, worin R" einen C₁₋₁₂-Alkylrest bedeutet, stehen.

16. Additive nach Anspruch 15, dadurch **gekennzeichnet**, daß das Olefinmonomer der allgemeinen Formel (III) ausgewählt ist aus der Gruppe, bestehend aus Ethylen, α-Olefinen, Vinylchlorid, Dichlor-1,1-ethylen, Styrol oder seinen Derivaten, Vinylethern wie Methylvinylether und Vinylestern wie Vinylacetat oder -propionat und vorzugsweise Ethylen, Styrol oder Vinylacetat.

17. Additive nach Anspruch 8, dadurch **gekennzeichnet**, daß das Copolymer bis zu 99 Gew.-% (Meth)acrylsäureester, 0,1 bis 10 Gew.-% Maleinsäureanhydrid, 1 bis 8 Gew.-% eines Olefinmonomers, 1 bis 7 Gew.-% eines stickstoffhaltigen Monomers enthält und sein Gewichtsmittel des Molekulargewichts zwischen 20.000 und 500.000 und vorzugsweise zwischen 50.000 und 200.000 liegt.

18. Additive nach Anspruch 6, dadurch **gekennzeichnet**, daß das Copolymer mit vicinalen Carboxylgruppen erhalten wird durch Aufpfropfen einer ungesättigten α-β-Dicarbonsäure auf ein Kohlenwasserstoffpolymer oder ein Poly(meth)acrylat.

19. Additive nach Anspruch 18, dadurch **gekennzeichnet**, daß das Kohlenwasserstoffpolymer ein Ethylencopolymer mit 15 bis 90 Gew.-% Ethylen, 0 bis 20 Gew.-% eines nichtkonjugierten unverzweigten oder cyclischen Diens ist, ausgewählt unter Hexadien-1,4, Methyl-2-pentadien-1,4, Cyclopentadien-1,4, Cyclooctadien-1, 5 und Norbornenderivaten wie Methylen-5-norbonen-2, wobei die restliche Komponente wenigstens aus einem C₃₋₂₄-α-Olefin wie Propylen, Buten, Penten, Heptan, Octen, Nonen, Decen, Methyl-4-penten und Methyl-5-penten stammt.

20. Additive nach Anspruch 19, dadurch **gekennzeichnet**, daß das Ethylencopolymer ein Ethylen-Propylen-Copolymer ist.

21. Additive nach Anspruch 19, dadurch **gekennzeichnet**, daß das Ethylencopolymer ein Gewichtsmittel des Molekulargewichts zwischen 20.000 und 500.000 und vorzugsweise zwischen 50.000 und 200.000 und eine Polydispersität von unter 10 und vorzugsweise von 4 aufweist.

22. Additive nach Anspruch 18, dadurch **gekennzeichnet**, daß das Kohlenwasserstoffpolymer ein Diencopolymer ist, hergestellt durch Copolymerisation aus zwei Diolefinen wie Butadien, Isopren oder Dimethyl-2,2-butadien oder durch Copolymerisation eines dieser Diolefine mit Styrol und insbesondere ein Butadien-Isopren- oder Butadien-Styrol-Copolymer.

23. Additive nach Anspruch 18, dadurch **gekennzeichnet**, daß das Kohlenwasserstoffpolymer ein Dienhomopolymer wie ein Butadien-, Isopren- oder Dimethyl-2,3-butadien-Polymer ist.

24. Additive nach Anspruch 18, dadurch **gekennzeichnet**, daß das Kohlenwasserstoffpolymer ein Homopolymer von α-Olefinen mit wenigstens 4 C-Atomen und vorzugsweise Polyisobutylen ist.

25. Additive nach Anspruch 18, dadurch **gekennzeichnet**, daß die Poly(meth)acrylate hergestellt werden durch Polymerisation eines Gemisches aus C₁₋₂₁-Estern der (Meth)acrylsäure.

26. Additive nach einem der Ansprüche 18 bis 25, dadurch **gekennzeichnet**, daß die Kohlenwasserstoffpolymere und die (Meth)acrylate ein stickstoffhaltiges Monomer, wie z.B. die Monomere der allgemeinen Formel (II), Vinylpyridine und Vinylpyrrolidone aufweisen.

27. Additive nach einem der Ansprüche 1 bis 26, dadurch **gekennzeichnet**, daß die Kondensation des Alkylenpolyamins der allgemeinen Formel (I) mit dem vicinale Carbonsäurefunktionen aufweisenden Copolymer in einem organischen Lösungsmittel oder in einem Öl bei einer Temperatur zwischen 90 und 170°C während 3 bis 8 Stunden unter Verwendung von 0,5 bis 2 und vorzugsweise 1 Mol Alkylenpolyamin pro vicinale Carbonsäurefunktion des Copolymers durchgeführt wird.

28. Schmiermittelzusammensetzungen, dadurch **gekennzeichnet**, daß sie einen größeren Anteil eines natürlichen oder synthetischen Schmieröls und einen kleineren Anteil wenigstens eines Additivs nach einem der Ansprüche 1 bis 27 enthalten.

29. Zusammensetzungen nach Anspruch 28, dadurch **gekennzeichnet**, daß sie 0,2 bis 15 und vorzugsweise 1 bis 10% wenigstens eines Additivs nach einem der Ansprüche 1 bis 27 enthalten.

30. Konzentrierte Schmiermittelzusammensetzungen, dadurch **gekennzeichnet**, daß sie 15 bis 50 Gew.-% wenigstens eines Additivs nach einem der Ansprüche 1 bis 27 enthalten.

31. Zusammensetzungen nach einem der Ansprüche 28 bis 30, dadurch **gekennzeichnet**, daß sie auch noch andere übliche Schmiermitteladditive enthalten, wie z.B. Korrosionsinhibitoren, Detergentien, Verschleißminderer, Dispergatoren und Schaumverhütungsmittel.

32. Additive nach Anspruch 17, dadurch **gekennzeichnet**, daß das Copolymer 70 bis 95 Gew.-% (Meth)-acrylsäureester, 1 bis 8% Maleinsäureanhydrid, 1 bis 8% eines Olefinmonomers, 1 bis 7% eines stickstoffhaltigen Monomers enthält und sein Gewichtsmittel des Molekulargewichts zwischen 20.000 und 500.000 und vorzugsweise zwischen 50.000 und 200.000 liegt.

33. Additive nach Anspruch 18, dadurch **gekennzeichnet**, daß das Copolymer mit vicinalen Carboxylgruppen erhalten wird durch Aufpfropfen eines Maleinsäureanhydridderivats wie Maleinsäureanhydrid selbst, Chlormaleinsäure- und Itaconsäureanhydrid auf das Kohlenwasserstoffpolymer oder das Poly(meth)acrylat.

34. Additive nach Anspruch 19, dadurch **gekennzeichnet**, daß das Kohlenwasserstoffpolymer ein Ethylencopolymer mit 25 bis 80 Gew.-% Ethylen und 0 bis 20 Gew.-% des nichtkonjugierten unverzweigten oder cyclischen Diens ist, wobei die restliche Komponente wenigstens aus einem C₃₋₂₄-α-Olefin stammt.

## Claims

1. Multi-functional polymeric additives to lubricants, characterised in that they result from the condensation of an alkylenepolyamine of the general formula 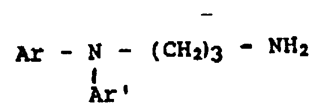 wherein Ar is an aromatic radical and Ar' is either a hydrogen atom or a second aromatic radical optionally forming with Ar and the nitrogen atom to which they are attached a heterocyclic structure, onto a copolymer having vicinal carboxylic groupings and of which the average molecular weight is ≥ 20,000.

2. Additives according to Claim 1, characterised in that, in the general formula (I), Ar is a naphthyl radical and Ar' is a hydrogen atom.

3. Additives according to Claim 2, characterised in that the alkylenepolyamine of the general formula (I) is N-aminopropyl-2-naphthylamine.

4. Additives according to Claim 1, characterised in that, in the general formula (I), Ar and Ar' are connected to one another to form with the nitrogen to which they are attached the phenothiazinyl radical.

5. Additives according to Claim 4, characterised in that the alkylenepolyamine of the general formula (I) is 10-aminopropylphenothiazine, or 3-aminopropylaminophenothiazine.

6. Additives according to any one of Claims 1 to 5, characterised in that the copolymer having vicinal carboxylic groupings is obtained by copolymerising or grafting an unsaturated alpha-beta-dicarboxylic acid in the form of the diacid or the anhydride.

7. Additives according to Claim 6, characterised in that the unsaturated alpha-beta-dicarboxylic acid is a derivative of maleic anhydride, such as maleic anhydride itself, chloromaleic anhydride and itaconic anhydride.

8. Additives according to any one of Claims 1 to 6, characterised in that the polymer is obtained by copolymerising a maleic anhydride derivative with at least one ester of an unsaturated monoacid or diacid.

9. Additives according to Claim 8, characterised in that the ester is selected from the group consisting of the (meth)acrylates, the maleates and the fumarates having from 1 to 22 carbon atoms, such as methyl, ethyl, n-butyl, 2-ethylhexyl, octyl, decyl, dodecyl, n-tetradecyl, n-hexadecyl or n-octadecyl (meth)acrylates.

10. Additives according to Claim 9, characterised in that the ester is an industrial mixture of several (meth)acrylates, comprising C₆-C₁₅-alkyl chains, and preferably C₈-C₁₃-alkyl chains.

11. Additives according to any one of Claims 8 to 10, characterised in that the copolymer contains nitrogen-containing monomers and/or olefinic monomers.

12. Additives according to Claim 11, characterised in that the nitrogen-containing monomer corresponds to the general formula
CH₂ = CR₂ - CO - Y - R₃ - NR₄ R₅ (II)
wherein
- R₂ is a hydrogen atom or a methyl radical,
- Y represents an oxygen or sulphur atom or the group - NH -,
- R₃ is a C₂-C₆-alkylene group,
- R₄ and R₅, which may be identical or different, are radicals selected from the group consisting of the alkyl, cycloalkyl, arylalkyl and aryl groupings, preferably of the methyl and ethyl groupings.

13. Additives according to Claim 12, characterised in that the nitrogen-containing monomer of the general formula (II) is selected from N,N-dimethylaminopropylmethacrylamide, N,N-diethylaminopropylmethacrylamide, N,N-dimethylaminoethylmethacrylamide, N,N-diethylaminoethylmethacrylamide, N,N-dimethylaminoethyl methacrylate or N,N-diethylaminoethyl methacrylate.

14. Additives according to Claim 11, characterised in that the nitrogen-containing monomer is selected from the vinylpyridines and the vinylpyrrolidones.

15. Additives according to Claim 11, characterised in that the olefinic monomer corresponds to the general formula
CH₂ = CZ₁ Z₂ (III)
wherein Z₁ and Z₂, which may be identical or different, represent hydrogen, a saturated, unsaturated or aromatic C₁-C₃₀-hydrocarbon radical, a halogen, such as fluorine, chlorine or bromine, a grouping -O-CO-R' (in which R' is a C₁-C₃-alkyl radical) or a grouping -OR" (in which R" is a C₁-C₁₂-alkyl radical).

16. Additives according to Claim 15, characterised in that the olefinic monomer of the general formula (III) is selected from the group consisting of ethylene, the alpha-olefins, vinyl chloride, 1,1-dichloroethylene, styrene or its derivatives, vinyl ethers, such as methyl vinyl ether, and vinyl esters, such as vinyl acetate or propionate, preferably from ethylene, styrene or vinyl acetate.

17. Additives according to Claim 8, characterised in that the copolymer contains up to 99% by weight of (meth)acrylic esters, from 0.1 to 10% of maleic anhydride, from 1 to 8% of an olefinic monomer, from 1 to 7% of a nitrogen-containing monomer and its average molecular weight is between 20,000 and 500,000 and preferably between 50,000 and 200,000.

18. Additives according to Claim 6, characterised in that the copolymer having vicinal carboxylic groupings is obtained by grafting an unsaturated alpha-beta-dicarboxylic acid onto a hydrocarbon polymer or a poly(meth)acrylate.

19. Additives according to Claim 18, characterised in that the hydrocarbon polymer is an ethylene copolymer containing from 15 to 90% by weight of ethylene, from 0 to 20% by weight of an unconjugated linear or cyclic diene selected from 1,4-hexadiene, 2-methyl-1,4-pentadiene, 1,4-cyclopentadiene, 1,5-cyclooctadiene and the derivatives of norbornene, such as 5-methylene-2-norbornene, the remainder originating from at least one C₃-C₂₄-alpha-olefin, such as propylene, butene, pentene, heptene, octene, nonene, decene, 4-methylpentene and 5-methylpentene.

20. Additives according to Claim 19, characterised in that the ethylene copolymer is an ethylene/propylene copolymer.

21. Additives according to Claim 19, characterised in that the ethylene copolymer has an average molecular weight of between 20,000 and 500,000, preferably between 50,000 and 200,000, and a polydispersity of less than 10, preferably less than 4.

22. Additives according to Claim 18, characterised in that the hydrocarbon polymer is a diene copolymer prepared by copolymerising two diolefins, such as butadiene, isoprene or 2,2-dimethylbutadiene, or by copolymerising one of those diolefins with styrene, especially a butadiene/isoprene or butadiene/styrene copolymer.

23. Additives according to Claim 18, characterised in that the hydrocarbon polymer is a diene homopolymer, such as the polymers of butadiene, of isoprene or of 2,3-dimethylbutadiene.

24. Additives according to Claim 18, characterised in that the hydrocarbon polymer is a homopolymer of alpha-olefins containing at least four carbon atoms and preferably of polyisobutylene.

25. Additives according to Claim 18, characterised in that the poly(meth)acrylates are prepared by polymerising a mixture of C₁-C₂₁-esters of (meth)acrylic acid.

26. Additives according to any one of Claims 18 to 25, characterised in that the hydrocarbon polymers and the (meth)acrylates contain a nitrogen-containing monomer, such as the monomers of the general formula (II), vinylpyridines and vinylpyrrolidones.

27. Additives according to any one of Claims 1 to 26, characterised in that the condensation of the alkylenepolyamine of the general formula (I) onto the copolymer having vicinal carboxylic acid functions is carried out in an organic solvent or in an oil, at a temperature of between 90 and 170°C for from 3 to 8 hours, using from 0.5 to 2, preferably 1 mole(s) of alkylenepolyamine per vicinal carboxylic acid function of the copolymer.

28. Lubricating compositions, characterised in that they contain a major proportion of a natural or synthetic lubricating oil and a minor proportion of at least one additive according to Claims 1 to 27.

29. Compositions according to Claim 28, characterised in that they contain from 0.2 to 15% and preferably from 1 to 10% of at least one additive according to Claims 1 to 27.

30. Concentrated lubricating compositions, characterised in that they contain from 15 to 50% by weight of at least one additive according to Claims 1 to 27.

31. Compositions according to any one of Claims 28 to 30, characterised in that they contain other customary additives to lubricants, such as corrosion inhibitors, detergents and wear-resistant, dispersing and anti-foam additives.

32. Additives according to Claim 17, characterised in that the copolymer contains from 70 to 95% by weight of (meth)acrylic esters, from 1 to 8% of maleic anhydride, from 1 to 8% of an olefinic monomer, from 1 to 7% of a nitrogen-containing monomer and its average molecular weight is between 20,000 and 500,000 and preferably between 50,000 and 200,000.

33. Additives according to Claim 18, characterised in that the copolymer having vicinal carboxylic groupings is obtained by grafting a maleic anhydride derivative, such as maleic anhydride itself, chloromaleic anhydride or itaconic anhydride, onto the hydrocarbon polymer or the poly(meth)acrylate.

34. Additives according to Claim 19, characterised in that the hydrocarbon polymer is an ethylene copolymer containing from 25 to 80% by weight of ethylene, from 0 to 20% by weight of unconjugated linear or cyclic diene, the remainder originating from at least one of the C₃-C₂₄-alphaolefins.
